# EUROPÄISCHE PATENTSCHRIFT

(11) **EP 3 212 485 B1**
(45) Veröffentlichungstag und Bekanntmachung des Hinweises auf die Patenterteilung: **27.02.2019**
(21) Anmeldenummer: 15771925.3
(22) Anmeldetag: 29.09.2015
(51) Int. Cl.: B62D 15/02, G05D 1/00, G05D 1/02, G08G 1/16

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF PERMETTANT DE FAIRE FONCTIONNER UN VÉHICULE

(30) Priorität: 27.10.2014 DE 102014221755
(43) Veröffentlichungstag der Anmeldung: 06.09.2017
(73) Patentinhaber: Robert Bosch GmbH, 70442 Stuttgart (DE)
(72) Erfinder: NORDBRUCH, Stefan, 70806 Kornwestheim (DE); HOFFMANN, Stefan, 74321 Bietigheim (DE)
(86) Internationale Anmeldenummer: PCT/EP2015/072326
(87) Internationale Veröffentlichungsnummer: WO 2016/066351

(56) Entgegenhaltungen:
- DE-A1-102011 079 703
- DE-A1-102012 015 922
- DE-A1-102012 203 235
- JP-A- 2007 295 033
- US-A1- 2007 198 190
- US-A1- 2010 156 672
- US-A1- 2012 188 100
- US-A1- 2014 197 939

## Beschreibung

Die Erfindung betrifft ein Verfahren und eine Vorrichtung zum Betreiben eines Fahrzeugs. Die Erfindung betrifft ferner ein Parkplatzsystem für Fahrzeuge sowie ein Computerprogramm.

### Stand der Technik

Die Offenlegungsschrift JP 2007-295033 A zeigt, wie ein Fahrer mittels seines Mobiltelefons einen Parkassistenten seines Fahrzeugs aktiviert. Der Parkassistent parkt dann automatisch, also autonom, das Fahrzeug aus.

Die US 2010/0156672 A1 ist als nächstliegender Stand der Technik nach dem Oberbegriff der Ansprüche 1 und 8 zu sehen und beschreibt ein System und ein Verfahren zur Realisierung eines Automatisierten Valet Parkings auf einem dazu vorgesehenen Parkplatz. Dabei ist vorgesehen, dass ein Fahrzeug zu einem Stellplatz innerhalb des Parkplatzes geführt wird, wobei der Stellplatz gewählt wird abhängig von der aktuellen Situation auf dem Parkplatz. Es wird eine Trajektorie bestimmt, auf der sich das Fahrzeug von seiner aktuellen Position zu dem Stellplatz bewegen soll. Es ist vorgehsehen, dass beim Auftreten von Hindernissen, wie Personen oder anderen Fahrzeugen, die Trajektorie angepasst wird, oder das Fahrzeug angehalten wird, um eine Kollision zu vermeiden.

Bei einem vollautomatisierten (autonomen) sogenannten Valet Parking wird ein Fahrzeug von seinem Fahrer auf einer Abgabestelle, z.B. vor einem Parkhaus, geparkt und von da fährt das Fahrzeug selber in eine Parkposition/Parkbucht und wieder zurück zur Abgabestelle.

Bei einem solchen automatischen Parkvorgang gibt es eine Vielzahl von Herausforderungen, z.B.:
Im Mischbetrieb (gleichzeitiger Betrieb von autonom fahrenden Fahrzeugen und nicht autonom fahrenden Fahrzeugen, also manuell geführte Fahrzeuge) kann es zu Situationen kommen, in denen sich die Fahrzeuge (autonom fahrende Fahrzeuge und Fahrzeuge mit einem menschlichen Fahrer) abstimmen müssen. Im Normalfall wird dies zwischen menschlichen Fahrern z.B. per Handzeichen durchgeführt

Ferner können die einzelnen Fahrzeugsensoriken oder die Infrastruktur Unzulänglichkeiten in einer Genauigkeit oder einer Robustheit aufweisen. Das heißt, dass bei (nahen) Annäherungen oder Vorbeifahren eine Gefahr von Kollisionen bestehen könnte.

### Offenbarung der Erfindung

Die der Erfindung zugrunde liegende Aufgabe kann daher darin gesehen werden, ein Verfahren zum Betreiben eines Fahrzeugs bereitzustellen, welches eine Gefahr von Kollisionen in einem Mischbetrieb von autonom und nicht autonom fahrenden Fahrzeugen auf einem Parkplatz verringert oder sogar vermeidet.

Die der Erfindung zugrunde liegende Aufgabe kann auch darin gesehen werden, eine entsprechende Vorrichtung zum Betreiben eines Fahrzeugs bereitzustellen.

Die der Erfindung zugrunde liegende Aufgabe kann darin gesehen werden, ein entsprechendes Parkplatzsystem für Fahrzeuge bereitzustellen.

Des Weiteren kann die der Erfindung zugrunde liegende Aufgabe darin gesehen werden, ein entsprechendes Computerprogramm bereitzustellen.

Nach einem Aspekt wird ein Verfahren zum Betreiben eines Fahrzeugs bereitgestellt, wobei das Fahrzeug auf einem Parkplatz ferngesteuert derart geführt wird, dass ein vorbestimmter Mindestabstand zu mobilen Objekten im Umfeld des Fahrzeugs eingehalten wird.

Gemäß einem weiteren Aspekt wird eine Vorrichtung zum Betreiben eines Fahrzeugs bereitgestellt, umfassend eine Fernsteuerung zum ferngesteuerten Führen des Fahrzeugs derart, dass ein vorbestimmter Mindestabstand des Fahrzeugs zu mobilen Objekten im Umfeld des Fahrzeugs eingehalten werden kann.

Nach einem Aspekt wird ein Parkplatzsystem für Fahrzeuge bereitgestellt, umfassend einen Parkplatz und die erfindungsgemäße Vorrichtung.

Gemäß einem weiteren Aspekt wird ein Computerprogramm bereitgestellt, welches Programmcode zur Durchführung des erfindungsgemäßen Verfahrens umfasst, wenn das Computerprogramm auf einem Computer ausgeführt wird.

Nach einem Aspekt wird ein Fahrzeug bereitgestellt, welches eine Führungseinrichtung zum autonomen Führen des Fahrzeugs und eine Kommunikationsschnittstelle umfasst, wobei die Kommunikationsschnittstelle ausgebildet ist, über ein Kommunikationsnetzwerk Fernsteuerungssignale zu empfangen, wobei die Führungseinrichtung ausgebildet ist, das Fahrzeug ansprechend auf die Fernsteuerungssignale autonom zu führen.

Die Erfindung umfasst also insbesondere den Gedanken, das Fahrzeug auf einem Parkplatz derart ferngesteuert zu führen, dass stets ein vorbestimmter Mindestabstand zu mobilen Objekten im Umfeld des Fahrzeugs eingehalten wird. Dadurch also, dass stets ein vorbestimmter Mindestabstand eingehalten wird, wird in vorteilhafter Weise eine Kollisionsgefahr verringert oder sogar ganz vermieden. Somit ist also in vorteilhafter Weise auch ein Mischbetrieb von autonom fahrenden und nicht autonom fahrenden Fahrzeugen auf dem Parkplatz ermöglicht. Insbesondere kann so in vorteilhafter Weise eine Unzulänglichkeit in einer Genauigkeit bezüglich einer Umfeldsensorik von Fahrzeugen oder bezüglich einer Infrastruktur kompensiert werden.

Es wird also verhindert, dass sich die Fahrzeuge zu nahe kommen. Dies insbesondere dadurch, dass der vorbestimmte Mindestabstand eingehalten wird.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Parkstände oder Stellplätze können im Folgenden auch als Parkpositionen bezeichnet werden. Eine Parkposition im Sinne der vorliegenden Erfindung ist eine Position, an welcher das Fahrzeug autonom oder ferngesteuert parken soll. Das heißt also, dass nach einer Ausführungsform vorgesehen ist, dass das Fahrzeug autonom an der Parkposition parkt oder ferngesteuert an der Parkposition parkt. Das heißt also, dass das Fahrzeug ferngesteuert derart geführt wird, dass es an der Parkposition parkt.

Eine Abgabeposition, die auch als eine Abgabestelle bezeichnet werden kann, im Sinne der vorliegenden Erfindung, ist eine Position, an welcher ein Fahrer des Fahrzeugs sein Fahrzeug für einen autonomen oder ferngesteuerten Parkvorgang abstellen und von dieser sein Fahrzeug zu einem späteren Zeitpunkt wieder abholen kann. Das heißt also insbesondere, dass das an der Abgabeposition abgestellte Fahrzeug derart ferngesteuert auf dem Parkplatz geführt wird, dass es von der Abgabeposition zu einer Parkposition fährt und dort insbesondere einparkt. Das Ermitteln, auf welcher Parkposition das Fahrzeug einparken soll, kann beispielsweise wie noch nachstehend erläutert durchgeführt werden.

Gemäß einer weiteren Ausführungsform ist vorgesehen, dass das Fahrzeug autonom aus der Parkposition ausparkt oder derart ferngesteuert geführt wird, dass es aus der Parkposition ausparkt.

In einer anderen Ausführungsform ist vorgesehen, dass das Fahrzeug autonom von der Parkposition zu der Abgabeposition zurückfährt oder derart ferngesteuert geführt wird, dass es von der Parkposition zurück zu der Abgabeposition fährt.

Autonom im Sinne der vorliegenden Erfindung bedeutet insbesondere, dass das Fahrzeug selbstständig, also ohne einen Eingriff eines Fahrers, navigiert oder fährt. Das Fahrzeug fährt also selbstständig, insbesondere navigiert selbstständig, auf dem Parkplatz, ohne dass ein Fahrer hierfür das Fahrzeug steuern oder sich in diesem befinden müsste. Das heißt also insbesondere, dass das Fahrzeug beispielsweise eine Führungseinrichtung für die Navigation des Fahrzeugs umfasst, die ausgebildet ist, das Fahrzeug autonom zu führen.

Ein Führen im Sinne der vorliegenden Erfindung umfasst insbesondere eine Quer- und/oder eine Längsführung des Fahrzeugs.

Ein solch autonom fahrendes Fahrzeug, das automatisch ein- und ausparken kann, wird beispielsweise als ein AVP-Fahrzeug bezeichnet. AVP steht für "Automatic Valet Parking" und kann mit "automatischer Parkvorgang" übersetzt werden. Fahrzeuge, die diese AVP-Funktionalität nicht aufweisen, werden beispielsweise als normale oder manuelle Fahrzeuge bezeichnet.

Nach einer Ausführungsform ist vorgesehen, dass das Fernsteuern über ein Kommunikationsnetzwerk durchgeführt wird. Das heißt also insbesondere, dass Fernsteuerungsbefehle über ein Kommunikationsnetzwerk an das Fahrzeug gesendet werden.

In einer Ausführungsform ist vorgesehen, dass das Kommunikationsnetzwerk ein WLAN-Netzwerk und/oder ein Mobilfunknetzwerk umfasst.

Nach einer Ausführungsform ist vorgesehen, dass eine über das Kommunikationsnetzwerk durchgeführte Kommunikation verschlüsselt wird. Das heißt also insbesondere, dass Befehle, Signale, Daten, die über das Kommunikationsnetzwerk, zum Beispiel zwischen einem Fahrzeug und einer Vorrichtung, insbesondere eines Parkhaussystems, verschlüsselt wird respektive sind. Dadurch ist insbesondere ein Mitlesen der Kommunikation seitens Unbefugter in vorteilhafter Weise verhindert oder zumindest erschwert.

Erfindungsgemäß ist vorgesehen, dass zum Einhalten des vorbestimmten Mindestabstands das Fahrzeug in eine von mehreren Parkpositionen des Parkplatzes geführt wird. Das heißt also insbesondere, dass das Fahrzeug zum Einhalten des vorbestimmten Mindestabstands ferngesteuert in eine von mehreren Parkpositionen des Parkplatzes geführt wird. Insbesondere ist vorgesehen, dass das Fahrzeug auf dieser Parkposition, in welche es geführt wurde, abgestellt, also insbesondere geparkt, wird. Dadurch, dass das Fahrzeug in eine von mehreren Parkpositionen geführt wird, wird es in vorteilhafter Weise aus dem fahrenden oder fließenden Verkehr herausgenommen. Das heißt also insbesondere, dass es nicht mehr ein aktiver Teilnehmer des fahrenden oder fließenden Verkehrs ist. In der Parkposition befindet sich das Fahrzeug in vorteilhafter Weise außerhalb der Fahrspuren des Parkplatzes. Es stellt somit in vorteilhafter Weise kein Hindernis mehr für weitere Fahrzeuge, die auf dem Parkplatz fahren, dar. Somit kann also einfach und effektiv sichergestellt werden, dass der vorbestimmte Mindestabstand eingehalten werden kann.

Erfindungsgemäß ist vorgesehen, dass die Parkposition abhängig von einem Parameter ermittelt wird. Dadurch wird insbesondere der technische Vorteil bewirkt, dass das Ermitteln, in welche der mehreren Parkpositionen das Fahrzeug geführt wird, aufgrund der Parametrisierung an verschiedene Situationen angepasst werden kann. Somit ist ein flexibleres Konzept gegeben, um den vorbestimmten Mindestabstand mittels des Führens des Fahrzeugs in eine Parkposition geschaffen.

In einer anderen Ausführungsform ist vorgesehen, dass die Parkposition abhängig von mehreren Parametern ermittelt wird.

Erfindungsgemäß ist vorgesehen, dass der Parameter eine momentane und/oder erwartete Verkehrssituation auf dem Parkplatz beschreibt. Dadurch wird insbesondere der technische Vorteil bewirkt, dass die konkret vorliegende Verkehrssituation und/oder die erwartete Verkehrssituation auf dem Parkplatz bei dem Ermitteln der Parkposition berücksichtigt wird. Somit ist also eine flexible und angepasste Führung des Fahrzeugs ermöglicht.

Erfindungsgemäß ist vorgesehen, dass, wenn die momentane und/oder erwartete Verkehrssituation ein Fehlen von Gegenverkehr und ein nachfolgendes Fahrzeug umfasst, das Fahrzeug in diejenige Parkposition geführt wird, die bezogen auf seine momentane Position am entferntesten auf dem Parkplatz vorgesehen ist.

Dadurch also, dass das Fahrzeug auf die entfernteste Parkposition geführt wird, ist insbesondere der technische Vorteil bewirkt, dass es möglichst weit entfernt von dem nachfolgenden Fahrzeug abgestellt wird. Somit wird also eine entsprechend große Distanz zwischen den beiden Fahrzeugen bewirkt.

Erfindungsgemäß ist vorgesehen, dass, wenn die momentane und/oder erwartete Verkehrssituation ein Vorhandensein von Gegenverkehr und ein Fehlen von einem nachfolgenden Fahrzeug umfasst, das Fahrzeug in diejenige Parkposition geführt wird, die bezogen auf seine momentane Position am nächsten auf dem Parkplatz vorgesehen ist.

Dadurch wird insbesondere der technische Vorteil bewirkt, dass das Fahrzeug möglichst schnell aus einer Fahrspur herausfährt. Dies insbesondere dadurch, dass es auf die nächste Parkposition geführt wird.

Erfindungsgemäß ist vorgesehen, dass, wenn die momentane und/oder erwartete Verkehrssituation ein Vorhandensein von Gegenverkehr und ein Vorhandensein von einem nachfolgenden Fahrzeug umfasst, das Fahrzeug in diejenige Parkposition geführt wird, die bezogen auf seine momentane Position am nächsten auf dem Parkplatz vorgesehen ist.

Auch dadurch wird insbesondere der technische Vorteil bewirkt, dass das Fahrzeug möglichst schnell aus einer Fahrspur entfernt wird. Dies insbesondere dadurch, dass das Fahrzeug auf die nächste Parkposition geführt wird.

In einer anderen Ausführungsform ist vorgesehen, dass, wenn die momentane und/oder erwartete Verkehrssituation ein vorausfahrendes Fahrzeug und/oder ein sich vorausbefindendes Lebewesen und ein Fehlen von einem nachfolgenden Fahrzeug umfasst, das Fahrzeug in diejenige Parkposition geführt wird, die bezogen auf seine momentane Position sowohl am nächsten auf dem Parkplatz als auch mindestens eine Parkposition vor der Parkposition des vorausfahrenden Fahrzeugs und/oder einer Position eines sich vorausbefindenden Lebewesen vorgesehen ist.

Dadurch wird insbesondere der technische Vorteil bewirkt, dass zum einen das Fahrzeug möglichst schnell aus einer Fahrspur herausgenommen wird, wobei zum anderen noch ein Sicherheitsabstand, zumindest eine Parkposition, zwischen dem Fahrzeug und einem vorausfahrenden Fahrzeug, das an seiner ihm zugewiesenen Parkposition parken soll respektive einer Position eines sich vorausbefindenden Lebewesens geschaffen ist.

Nach einer Ausführungsform sind mehrere Lebewesen vorgesehen, die insbesondere gleich oder vorzugsweise unterschiedlich gebildet sind. Ein Lebewesen im Sinne der vorliegenden Erfindung ist beispielsweise ein Mensch oder ein Tier.

In einer anderen Ausführungsform ist vorgesehen, dass, wenn die momentane und/oder erwartete Verkehrssituation ein vorausfahrendes Fahrzeug und/oder ein sich vorausbefindendes Lebewesen und ein Vorhandensein von einem nachfolgenden Fahrzeug umfasst, das Fahrzeug in diejenige Parkposition geführt wird, die vor eine Parkposition des vorausfahrenden Fahrzeugs und/oder einer Position eines sich vorausbefindenden Lebewesens vorgesehen ist.

Auch dadurch wird, wie bereits vorstehend erläutert, ein Mindestabstand, zumindest eine Parkposition, zwischen dem Fahrzeug und einem vorausfahrenden Fahrzeug respektive einem sich vorausbefindenden Lebewesen geschaffen.

Funktionalitäten der Vorrichtung, insbesondere der Fernsteuerung, ergeben sich aus Ausführungsformen des Verfahrens und umgekehrt. Das heißt also insbesondere, dass die Fernsteuerung eingerichtet ist, die einzelnen Verfahrensschritte, wie sie im Zusammenhang mit den Ausführungsformen des Verfahrens beschrieben sind, durchzuführen, also das Fahrzeug entsprechend zu führen.

Das heißt also insbesondere, dass nach einer Ausführungsform die Vorrichtung eingerichtet ist, das erfindungsgemäße Verfahren durchzuführen.

Nach einer Ausführungsform sind mehrere Fahrzeuge vorgesehen, wobei zumindest eines dieser Fahrzeuge oder mehrere dieser Fahrzeuge gemäß dem hier beschriebenen Verfahren betrieben wird. Das heißt also insbesondere, dass nach einer Ausführungsform ein Verfahren zum Betreiben von mehreren Fahrzeugen vorgesehen ist, wobei ein oder mehrere Fahrzeuge auf dem Parkplatz ferngesteuert derart geführt werden, dass ein vorbestimmter Mindestabstand zu mobilen Objekten im Umfeld des Fahrzeugs eingehalten wird.

Nach einer Ausführungsform ist eine Kommunikationsschnittstelle vorgesehen, die ausgebildet ist, Fernsteuerungssignale über ein Kommunikationsnetzwerk an ein Fahrzeug zu senden. Diese Fernsteuerungssignale werden nach einer anderen Ausführungsform mittels der Fernsteuerung generiert oder erzeugt.

Die Erfindung wird im Folgenden anhand von bevorzugten Ausführungsbeispielen näher erläutert. Hierbei zeigen
- Fig. 1: ein Verfahren zum Betreiben eines Fahrzeugs,
- Fig. 2: eine Vorrichtung zum Betreiben eines Fahrzeugs und
- Fig. 3: ein Parkplatzsystem für Fahrzeuge.

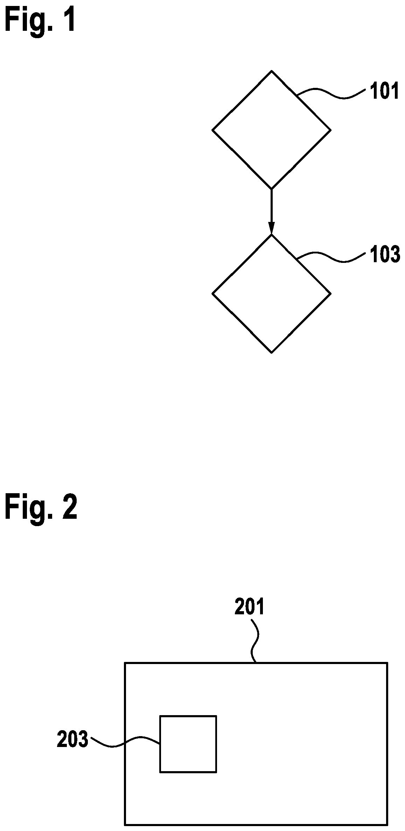

Fig. 1 zeigt ein Ablaufdiagramm eines Verfahrens zum Betreiben eines Fahrzeugs.

Gemäß einem Schritt 101 wird das Fahrzeug auf einem Parkplatz derart ferngesteuert geführt, dass gemäß einem Schritt 103 ein vorbestimmter Mindestabstand zu mobilen Objekten im Umfeld des Fahrzeugs eingehalten wird.

Ein mobiles Objekt im Sinne der vorliegenden Erfindung ist beispielsweise eine Person, also ein Mensch, oder ein Tier. Ein mobiles Objekt im Sinne der vorliegenden Erfindung ist insbesondere ein weiteres Fahrzeug. Das weitere Fahrzeug ist beispielsweise ein autonomes oder manuelles Fahrzeug. Wenn im Zusammenhang mit dem "mobilen Objekt" der Singular verwendet wurde, so soll stets der Plural und umgekehrt mitgelesen werden. Auch weitere AVP-Fahrzeuge können vorzugsweise ferngesteuert werden.

Fig. 2 zeigt eine Vorrichtung 201 zum Betreiben eines Fahrzeugs.

Die Vorrichtung 201 umfasst eine Fernsteuerung 203 zum ferngesteuerten Führen des Fahrzeugs derart, dass ein vorbestimmter Mindestabstand des Fahrzeugs zu mobilen Objekten im Umfeld des Fahrzeugs eingehalten werden kann. Die Fernsteuerung kann allgemein insbesondere als eine Fernsteuerungseinrichtung bezeichnet werden.

Nach einer Ausführungsform umfasst die Vorrichtung 201 eine Kommunikationsschnittstelle, die ausgebildet ist, über ein Kommunikationsnetzwerk Fernsteuerungssignale an ein Fahrzeug zu senden. Diese Fernsteuerungssignale werden insbesondere mittels der Fernsteuerung oder Fernsteuerungseinrichtung 203 generiert oder erzeugt. Diese Fernsteuerungssignale oder Fernsteuerungsbefehle "sagen" oder befehlen also dem Fahrzeug, wie es fahren soll, dass ein vorbestimmter Mindestabstand des Fahrzeugs zu mobilen Objekten im Umfeld des Fahrzeugs eingehalten werden kann.

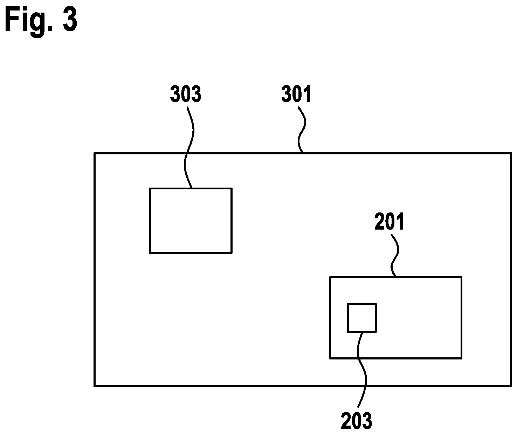

Fig. 3 zeigt ein Parkplatzsystem 301 für Fahrzeuge.

Das Parkplatzsystem 301 umfasst einen Parkplatz 303, der beispielsweise mehrere Parkstände oder Stellplätze aufweist. Das Parkplatzsystem 301 umfasst ferner die Vorrichtung 201 der Fig. 2.

Die Erfindung umfasst also insbesondere den Gedanken, ein Verfahren, eine Vorrichtung, ein Parkplatzsystem sowie ein Computerprogramm bereitzustellen, mittels welchen insbesondere bei einem vollautomatischen (autonomen) Valet Parking eine Gefahr von Kollisionen sowie einem "Aufeinandertreffen" von AVP-Fahrzeugen mit anderen Fahrzeugen (normalen oder weiteren AVP-Fahrzeugen) und/oder mit Personen vermindert oder sogar verhindert werden kann. Der erfindungsgemäße Gedanke ist hier insbesondere, dass ein Parkplatzverwaltungssystem, hier realisiert durch die Vorrichtung, die AVP-Fahrzeuge so "steuert", also fernsteuert, dass diese mit einem Mindestabstand zu anderen Fahrzeugen und/oder Personen, also mobilen Objekten, autonom fahren können. Dieser Mindestabstand oder vorbestimmter Mindestabstand ist dabei insbesondere definierbar.

Das Fernsteuern bedeutet im Sinne der vorliegenden Erfindung insbesondere, dass mittels der Fernsteuerung eine Kontrolle darüber besteht, wann das Fahrzeug, insbesondere das AVP-Fahrzeug losfährt, fährt, einparkt oder stoppt oder anhält oder sich abstellt. Das heißt also insbesondere, dass ein Parkplatzmanagementsystem die Kontrolle hat, wann ein AVP-Fahrzeug losfährt, fährt, einparkt, ausparkt, stoppt, anhält oder sich abstellt. Das Fernsteuern umfasst also einen oder mehrere der nachstehend genannten Manöver: Losfahren, Fahren, Einparken, Ausparken, Stoppen, Anhalten und Abstellen.

Des Weiteren wird mittels der Fernsteuerung insbesondere gesteuert oder kontrolliert, mit welchen Geschwindigkeiten, mit und/oder auf welchen Wegen oder Trajektorien das Fahrzeug fahren darf oder soll. Das Fernsteuern umfasst also insbesondere ein Steuern einer Fahrzeuggeschwindigkeit und/oder einer Fahrzeugtrajektorie und/oder einer Fahrzeugverzögerung und/oder einer Fahrzeugbeschleunigung.

Des Weiteren wird mittels der Fernsteuerung gesteuert oder kontrolliert, in welche Parkposition, z.B. in welche Parkbucht, das AVP-Fahrzeug fahren soll oder darf. Hierbei ist die Auswahl und die Zuweisung der Parkposition, z.B. der Parkbucht, für das AVP-Fahrzeug ein besonders bevorzugtes und sinnvolles Kriterium, da es maßgeblich einen Verkehr oder ein Aufeinandertreffen bestimmt.

Nach nicht gezeigten Ausführungsformen können beispielsweise zumindest eine oder mehrere der folgenden Situationen auftreten, dies insbesondere in Bezug auf die Zeit, die das AVP-Fahrzeug für einen Ein- und/oder Ausparkvorgang und/oder sowie für die Fahrt zur Parkposition und/oder zur Abgabeposition (auch Dropzone genannt) benötigt:
1. Kein Gegenverkehr (Fehlen oder Abwesenheit von einem vorausfahrenden Fahrzeug) und kein nachfolgendes Fahrzeug oder keine nachfolgenden Fahrzeuge oder kein nachfolgendes AVP-Fahrzeug oder keine nachfolgenden AVP-Fahrzeuge (also eine Abwesenheit oder ein Fehlen von einem nachfolgenden Fahrzeug).
2. Kein Gegenverkehr und ein oder mehrere nachfolgende Fahrzeuge, insbesondere AVP-Fahrzeuge.
3. Gegenverkehr (Fahrzeuge und/oder Personen und/oder Tiere) und kein nachfolgendes Fahrzeug oder keine nachfolgenden Fahrzeuge oder kein nachfolgendes AVP-Fahrzeug oder keine nachfolgenden AVP-Fahrzeuge.
4. Gegenverkehr (Fahrzeuge und/oder Personen und/oder Tiere) und ein oder mehrere nachfolgende Fahrzeuge, insbesondere AVP-Fahrzeuge.
5. Ein oder mehrere vorausfahrende Fahrzeuge respektive sich vorausbefindende Personen oder Tiere (Singular soll mitgelesen werden) und kein oder keine nachfolgende Fahrzeuge, insbesondere AVP-Fahrzeuge.
6. Ein oder mehrere vorausfahrende Fahrzeuge respektive Personen und/oder Tiere und ein oder mehrere nachfolgende Fahrzeuge, insbesondere AVP-Fahrzeuge.

Die vorstehend genannten Situationen sind also insbesondere relevant bei einer Ermittlung der Fahrwege für eine Verhinderung des Aufeinandertreffens respektive für einen vorgegebenen Mindestabstand.

Die vorstehend genannten Situationen beziehen sich dabei vorzugsweise immer auf die für das AVP-Fahrzeug zu fahrende Strecke respektive Weg oder Trajektorie.

Nach einer Ausführungsform ist vorgesehen, dass die ferngesteuerte Führung abhängig von einer jeweiligen Geschwindigkeit, mit der sich das Fahrzeug und die gegebenenfalls vorhandenen weiteren Fahrzeuge und/oder Personen und/oder Tiere bewegen, durchgeführt wird, vorzugsweise wird die ferngesteuerte Führung abhängig von Toleranzen in der jeweiligen Geschwindigkeit durchgeführt.

Gemäß einer weiteren Ausführungsform ist vorgesehen, dass die ferngesteuerte Führung derart durchgeführt wird, dass ein Aufeinandertreffen des Fahrzeugs auf einen Gegenverkehr verhindert wird. Priorität hat also insbesondere ein Verhindern von Aufeinandertreffen von Gegenverkehr, da an diesem vorbeigefahren werden muss. Das heißt also insbesondere, dass nach einer Ausführungsform ein solches Aufeinandertreffen verhindert wird. Bei vorausfahrendem und/oder nachfolgendem Verkehr ist ein Stoppen möglich, wobei dies nach einer Ausführungsform vorgesehen ist, womit ein Mindestabstand in vorteilhafter Weise erreicht werden kann.

Das heißt also insbesondere, dass nach einer weiteren Ausführungsform vorgesehen ist, das Fahrzeug und/oder weitere Fahrzeuge zu stoppen. Dies insbesondere dadurch, dass mittels der Fernsteuerung ein Stoppsignal an das oder die Fahrzeuge gesendet wird. Dies beispielsweise über das Kommunikationsnetzwerk. Dies also insbesondere mittels der Kommun ikationsschn ittstelle.

In einer Ausführungsform ist vorgesehen, dass, wenn ein Aufeinandertreffen des Fahrzeugs auf einen Gegenverkehr nicht verhindert werden kann, ein Stoppsignal an das Fahrzeug und/oder an das oder die Fahrzeuge des Gegenverkehrs gesendet wird. Sollte also nach dieser Ausführungsform ein Aufeinandertreffen nicht verhindert werden können, zum Beispiel weil der Gegenverkehr vermutlich schneller kommt, als der Parkvorgang abgeschlossen sein wird, dann wird nach dieser Ausführungsform ein Stoppsignal für eines oder mehrere der Fahrzeuge gesendet. Dies beispielsweise mittels der Vorrichtung, also insbesondere mittels der Fernsteuerung, insbesondere mittels eines Parkplatzverwaltungssystems. Somit kann beispielsweise in vorteilhafter Weise bewirkt werden, dass maximal ein Fahrzeug zur gleichen Zeit in Bewegung ist.

Ein Algorithmus der Zuweisung einer Parkposition für das Fahrzeug ist nach weiteren Ausführungsformen wie folgt:
Wenn nach einer Ausführungsform die erste vorstehend genannte Situation vorliegt, so ist es nach einer Ausführungsform egal, in welche Parkposition, z.B. Parkbucht, das Fahrzeug geführt wird. Es ist nach einer Ausführungsform vorgesehen, dass zusätzliche Kriterien für die Auswahl der Parkposition mitbetrachtet werden können.

Wenn nach einer Ausführungsform die zweite vorstehend genannte Situation vorliegt, so bekommt das Fahrzeug die am entfernteste Parkposition.

Wenn nach einer weiteren Ausführungsform die dritte vorstehend genannte Situation vorliegt, so bekommt das Fahrzeug die nächste Parkposition.

Wenn nach einer weiteren Ausführungsform die vorstehend genannte vierte Situation vorliegt, so bekommt das Fahrzeug die nächste Parkposition.

Wenn gemäß einer weiteren Ausführungsform die fünfte vorstehend genannte Situation vorgesehen ist, so bekommt das Fahrzeug die nächste Parkposition, aber mindestens eine Parkposition vor der Parkposition des vorausfahrenden respektive vor den zu erwartenden Personen.

Wenn nach einer Ausführungsform die sechste vorstehend genannte Situation vorgesehen ist, so bekommt das Fahrzeug die Parkposition vor der Parkposition des vorausfahrenden Fahrzeugs respektive vor den zu erwartenden Personen.

Nach einer Ausführungsform ist vorgesehen, dass der Parkplatz verschiedene voneinander abgegrenzte Bereiche umfasst, die insbesondere derart ausgebildet sind, dass diese getrennt voneinander angefahren werden können. Es also vorzugsweise verschiedene voneinander abgegrenzte Bereiche auf dem Parkplatz gibt, wie zum Beispiel eine linke Parkhaushälfte und eine rechte Parkhaushälfte. Diese verschieden voneinander abgegrenzten Bereiche sind derart ausgebildet, dass diese separat (also getrennt voneinander) und mindestens größtenteils separat angefahren werden können. Dies vereinfacht in vorteilhafter Weise die Durchführung des erfindungsgemäßen Verfahrens.

Nach einer anderen Ausführungsform ist vorgesehen, dass der Parkplatz, insbesondere das Parkhaus, für das vollautomatische Valet Parking einen eigenen Bereich reserviert hat. Also ist nach einer Ausführungsform vorgesehen, dass der Parkplatz einen für ein vollautomatisches Valet Parking reservierten eigenen Bereich umfasst. Dadurch können in vorteilhafter Weise mögliche Probleme durch einen Mischverkehr respektive durch Fußgänger usw. umgangen werden. Auch dadurch wird in vorteilhafter Weise die Durchführung des Verfahrens weiter vereinfacht.

Nach einer Ausführungsform ist vorgesehen, dass eine Anwesenheit und eine Bewegung von AVP-Fahrzeugen, insbesondere von normalen Fahrzeugen, und/oder Personen durch ein Parkplatzmanagementsystem, das eine Parkhausüberwachung umfassend beispielsweise ein Videokamerasystem umfasst, überwacht wird.

Nach einer weiteren Ausführungsform wird der gesamte Vorgang oder zumindest einige der vorstehend genannten Verfahrensschritte, für Dokumentationszwecke dokumentiert. Das heißt, dass nach einer Ausführungsform zumindest einige, vorzugsweise alle, der vorstehend und nachstehend genannten Verfahrensschritte für Dokumentationszwecke dokumentiert, insbesondere aufgezeichnet, insbesondere mittels einer oder mehrere Videokameras aufgezeichnet, werden.

Das Dokumentieren, insbesondere das Aufzeichnen, wird nach einer Ausführungsform mittels einer Parkplatzüberwachung, insbesondere einer Parkhausüberwachung, durchgeführt. Die Parkplatzüberwachung umfasst nach einer Ausführungsform eine oder mehrere Videokameras.

Nach einer Ausführungsform ist eine Parkplatzüberwachung zum Überwachen des Parkplatzes vorgesehen, die ferner ausgebildet ist, zumindest einige, insbesondere alle, der vorstehend und nachstehend genannten Verfahrensschritte zu dokumentieren, insbesondere aufzuzeichnen.

Nach einer Ausführungsform werden die Befehle, also insbesondere die Fernsteuerungsbefehle, von dem Parkplatzverwaltungssystem an das oder die AVP-Fahrzeuge übertragen, z.B. über WLAN.

## Patentansprüche

1. Verfahren zum Betreiben eines Fahrzeugs, wobei das Fahrzeug auf einem Parkplatz ferngesteuert derart geführt (101) wird, dass ein vorbestimmter Mindestabstand zu mobilen Objekten im Umfeld des Fahrzeugs eingehalten (103) wird,
wobei zum Einhalten des vorbestimmten Mindestabstands das Fahrzeug in eine von mehreren Parkpositionen des Parkplatzes geführt wird, und
wobei die Parkposition abhängig von einem Parameter ermittelt wird, und
wobei der Parameter eine momentane und/oder erwartete Verkehrssituation auf dem Parkplatz beschreibt, **dadurch gekennzeichnet, dass**
wenn die momentane und/oder erwartete Verkehrssituation ein Fehlen von Gegenverkehr und ein nachfolgendes Fahrzeug umfasst, das Fahrzeug in diejenige Parkposition geführt wird, die bezogen auf seine momentane Position am entferntesten auf dem Parkplatz vorgesehen ist und/oder
wenn die momentane und/oder erwartete Verkehrssituation ein Vorhandensein von Gegenverkehr und ein Fehlen von einem nachfolgenden Fahrzeug umfasst, das Fahrzeug in diejenige Parkposition geführt wird, die bezogen auf seine momentane Position am nächsten auf dem Parkplatz vorgesehen ist und/oder
wenn die momentane und/oder erwartete Verkehrssituation ein Vorhandensein von Gegenverkehr und ein Vorhandensein von einem nachfolgenden Fahrzeug umfasst, das Fahrzeug in diejenige Parkposition geführt wird, die bezogen auf seine momentane Position am nächsten auf dem Parkplatz vorgesehen ist.

2. Verfahren nach Anspruch 1, wobei, wenn die momentane und/oder erwartete Verkehrssituation ein vorausfahrendes Fahrzeug und/oder ein sich vorausbefindendes Lebewesen und ein Fehlen von einem nachfolgenden Fahrzeug umfasst, das Fahrzeug in diejenige Parkposition geführt wird, die bezogen auf seine momentane Position sowohl am nächsten auf dem Parkplatz als auch mindestens eine Parkposition vor der Parkposition des vorausfahrenden Fahrzeugs und/oder einer Position eines sich vorausbefindenden Lebewesen vorgesehen ist.

3. Verfahren nach einem der Ansprüche 1 oder 2, wobei, wenn die momentane und/oder erwartete Verkehrssituation ein vorausfahrendes Fahrzeug und/oder ein sich vorausbefindendes Lebewesen und ein Vorhandensein von einem nachfolgenden Fahrzeug umfasst, das Fahrzeug in diejenige Parkposition geführt wird, die vor eine Parkposition des vorausfahrenden Fahrzeugs und/oder einer Position eines sich vorausbefindenden Lebewesens vorgesehen ist.

4. Verfahren nach einem der vorherigen Ansprüche, wobei die ferngesteuerte Führung abhängig von einer jeweiligen Geschwindigkeit, mit der sich das Fahrzeug und die gegebenenfalls vorhandenen weiteren Fahrzeuge und/oder Personen und/oder Tiere bewegen, durchgeführt wird, vorzugsweise wird die ferngesteuerte Führung abhängig von Toleranzen in der jeweiligen Geschwindigkeit durchgeführt.

5. Verfahren nach einem der vorherigen Ansprüche, wobei die ferngesteuerte Führung derart durchgeführt wird, dass ein Aufeinandertreffen des Fahrzeugs auf einen Gegenverkehr verhindert wird.

6. Verfahren nach einem der vorherigen Ansprüche, wobei, wenn ein Aufeinandertreffen des Fahrzeugs auf einen Gegenverkehr nicht verhindert werden kann, ein Stoppsignal an das Fahrzeug und/oder an das oder die Fahrzeuge des Gegenverkehrs gesendet wird.

7. Verfahren nach einem der vorherigen Ansprüche, wobei zumindest einige, vorzugsweise alle, der vorstehend genannten Verfahrensschritte der vorherigen Ansprüche für Dokumentationszwecke dokumentiert, insbesondere aufgezeichnet, insbesondere mittels einer oder mehrere Videokameras aufgezeichnet, werden.

8. Vorrichtung (201) zum Betreiben eines Fahrzeugs nach einem Verfahren nach einem der vorherigen Ansprüche, umfassend eine Fernsteuerung (203) zum ferngesteuerten Führen des Fahrzeugs derart, dass ein vorbestimmter Mindestabstand des Fahrzeugs zu mobilen Objekten im Umfeld des Fahrzeugs eingehalten werden kann,
wobei zum Einhalten des vorbestimmten Mindestabstands das Fahrzeug in eine von mehreren Parkpositionen des Parkplatzes geführt wird, und wobei die Parkposition abhängig von einem Parameter ermittelt wird, und wobei der Parameter eine momentane und/oder erwartete Verkehrssituation auf dem Parkplatz beschreibt, **dadurch gekennzeichnet, dass**
wenn die momentane und/oder erwartete Verkehrssituation ein Fehlen von Gegenverkehr und ein nachfolgendes Fahrzeug umfasst, das Fahrzeug in diejenige Parkposition geführt wird, die bezogen auf seine momentane Position am entferntesten auf dem Parkplatz vorgesehen ist und/oder
wenn die momentane und/oder erwartete Verkehrssituation ein Vorhandensein von Gegenverkehr und ein Fehlen von einem nachfolgenden Fahrzeug umfasst, das Fahrzeug in diejenige Parkposition geführt wird, die bezogen auf seine momentane Position am nächsten auf dem Parkplatz vorgesehen ist und/oder
wenn die momentane und/oder erwartete Verkehrssituation ein Vorhandensein von Gegenverkehr und ein Vorhandensein von einem nachfolgenden Fahrzeug umfasst, das Fahrzeug in diejenige Parkposition geführt wird, die bezogen auf seine momentane Position am nächsten auf dem Parkplatz vorgesehen ist.

9. Parkplatzsystem (301) für Fahrzeuge, umfassend einen Parkplatz (303) und die Vorrichtung (201) nach Anspruch 8.

10. Parkplatzsystem (301) nach Anspruch 9, wobei der Parkplatz (303) verschiedene voneinander abgegrenzte Bereiche umfasst, die insbesondere derart ausgebildet sind, dass diese getrennt voneinander angefahren werden können.

11. Parkplatzsystem (301) nach Anspruch 9 oder 10, wobei der Parkplatz (303) einen für ein vollautomatisches Valet Parking reservierten eigenen Bereich umfasst.

12. Parkplatzsystem (301) nach einem der Ansprüche 9 bis 11, umfassend ferner eine Parkplatzüberwachung zum Überwachen des Parkplatzes (303), die ferner ausgebildet ist, zumindest einige, insbesondere alle, der in den Ansprüchen 1 bis 13 genannten Verfahrensschritte zu dokumentieren.

13. Computerprogramm, umfassend Programmcode zur Durchführung des Verfahrens nach einem der Ansprüche 1 bis 8, wenn das Computerprogramm auf einem Computer ausgeführt wird.

## Claims

1. Method for operating a vehicle, wherein the vehicle is guided (101) by remote control in a car park in such a way that a predetermined minimum distance from mobile objects in the surroundings of the vehicle is maintained (103),
wherein in order to maintain the predetermined minimum distance the vehicle is guided into one of a plurality of parked positions of the car park, and
wherein the parked position is determined as a function of a parameter, and
wherein the parameter describes an instantaneous and/or expected traffic situation in the car park, **characterized in that**
if the instantaneous and/or expected traffic situation comprises an absence of oncoming traffic and comprises a following vehicle, the vehicle is guided into that parked position which is provided furthest away in the car park with respect to the instantaneous position of said vehicle, and/or
if the instantaneous and/or expected traffic situation comprises a presence of oncoming traffic and comprises an absence of a following vehicle, the vehicle is guided into that parked position which is closest in the car park with respect to the instantaneous position of said vehicle, and/or
if the instantaneous and/or expected traffic situation comprises a presence of oncoming traffic and a presence of a following vehicle, the vehicle is guided into that parked position which is provided closest in the car park with respect to the instantaneous position of said vehicle.

2. Method according to Claim 1, wherein if the instantaneous and/or expected traffic situation comprises a vehicle travelling ahead and/or a living being which is located in front and an absence of a following vehicle, the vehicle is guided into that parked position which, with respect to its instantaneous position, is provided both closest in the car park and also at least one parked position before the parked position of the vehicle travelling ahead and/or a position of a living being located in front.

3. Method according to either of Claims 1 and 2, wherein if the instantaneous and/or expected traffic situation comprises a vehicle travelling ahead and/or a living being located in front and a presence of a following vehicle, the vehicle is guided into that parked position which is provided before a parked position of the vehicle travelling ahead and/or a position of a living being located in front.

4. Method according to one of the preceding claims, wherein the remote-controlled guidance is carried out as a function of a respective speed at which the vehicle and the possibly present further vehicles and/or persons and/or animals are moving, preferably the remote-controlled guidance is carried out as a function of tolerances in the respective speed.

5. Method according to one of the preceding claims, wherein the remote-controlled guidance is carried out in such a way that the vehicle is prevented from colliding with oncoming traffic.

6. Method according to one of the preceding claims, wherein if a collision of the vehicle with oncoming traffic cannot be prevented, a stop signal is transmitted to the vehicle and/or to the vehicle or vehicles of the oncoming traffic.

7. Method according to one of the preceding claims, wherein at least some, preferably all, of the abovementioned method steps of the preceding claims are documented for documentation purposes, in particular recorded, in particular recorded by means of one or more video cameras.

8. Device (201) for operating a vehicle according to a method according to one of the preceding claims, comprising a remote control system (203) for remote-controlled guidance of the vehicle in such a way that a predetermined minimum distance of the vehicle from mobile objects in the surroundings of the vehicle can be maintained,
wherein in order to maintain the predetermined minimum distance the vehicle is guided into one of a plurality of parked positions of the car park, and wherein the parked position is determined as a function of a parameter, and wherein the parameter describes an instantaneous and/or expected traffic situation in the car park, **characterized in that** if the instantaneous and/or expected traffic situation comprises an absence of oncoming traffic and comprises a following vehicle, the vehicle is guided into that parked position which is provided furthest away in the car park with respect to the instantaneous position of said vehicle, and/or
if the instantaneous and/or expected traffic situation comprises a presence of oncoming traffic and an absence of a following vehicle, the vehicle is guided into that parked position which is provided closest in the car park with respect to the instantaneous position of said vehicle, and/or
if the instantaneous and/or expected traffic situation comprises a presence of oncoming traffic and an presence of a following vehicle, the vehicle is guided into that parked position which is provided closest in the car park with respect to the instantaneous position of said vehicle.

9. Car park system (301) for vehicles, comprising a car park (303) and the device (201) according to Claim 8.

10. Car park system (301) according to Claim 9, wherein the car park (303) comprises different regions which are delimited from one another and which are embodied, in particular, in such a way that they can be driven to separately from one another.

11. Car park system (301) according to Claim 9 or 10, wherein the car park (303) comprises a separate region which is reserved for fully automated valet parking.

12. Car park system (301) according to one of Claims 9 to 11 also comprising a car park monitoring system for monitoring the car park (303) which is further designed to document at least some, in particular all, of the method steps which are specified in Claims 1 to 13.

13. Computer program, comprising program code for carrying out the method according to one of Claims 1 to 8, when the computer program is run on a computer.

## Revendications

1. Procédé, destiné à faire fonctionner un véhicule, lors duquel le véhicule est guidé (101) par télécommande sur un parking, de telle sorte qu'un écart minimum prédéfini par rapport à des objets mobiles dans l'environnement du véhicule soit respecté (103),
lors duquel pour le respect de l'écart minimum prédéfini, le véhicule est guidé dans une parmi plusieurs positions de stationnement du parking et lors duquel la position de stationnement est déterminée en fonction d'un paramètre et
le paramètre décrivant une situation de trafic momentanée et/ou attendue sur le parking, **caractérisé en ce que**
lorsque la situation de trafic momentanée et/ou attendue comprend une absence de trafic en sens inverse et un véhicule qui suit, le véhicule est guidé dans ladite position de stationnement qui, par rapport à sa position momentanée, est prévue le plus loin sur le parking et/ou
lorsque la situation de trafic momentanée et/ou attendue comprend une présence de trafic en sens inverse et une absence d'un véhicule qui suit, le véhicule est guidé dans la position de stationnement, qui par rapport à sa position momentanée est prévue le plus près sur le parking et/ou
lorsque la situation de trafic momentanée et/ou attendue comprend une présence de trafic en sens inverse et une présence d'un véhicule qui suit, le véhicule est guidé dans la position de stationnement qui, par rapport à sa position momentanée, est prévue le plus près sur le parking.

2. Procédé selon la revendication 1, lorsque la situation de trafic momentanée et/ou attendue comprend un véhicule qui précède et/ou un être humain qui précède et une absence d'un véhicule qui suit, le véhicule étant guidé dans la position de stationnement qui, par rapport à sa position momentanée, est prévue aussi bien le plus près sur le parking qu'au moins dans une position de stationnement à l'avant de la position de stationnement du véhicule qui précède et/ou d'une position d'un être humain qui précède.

3. Procédé selon l'une quelconque des revendications 1 ou 2, lorsque la situation de trafic momentanée et/ou attendue comprend un véhicule qui précède et/ou un être humain qui précède et une présence d'un véhicule qui suit, le véhicule est guidé dans la position de stationnement qui se trouve à l'avant d'une position de stationnement du véhicule qui précède et/ou d'une position d'un être humain qui précède.

4. Procédé selon l'une quelconque des revendications précédentes, lors duquel le guidage télécommandé est effectué en fonction d'une vitesse respective à laquelle se déplacent le véhicule et les autres véhicules et/ou personnes et/ou animaux présents le cas échéant, de préférence le guidage télécommandé est effectué en fonction de tolérances dans la vitesse respective.

5. Procédé selon l'une quelconque des revendications précédentes, lors duquel le guidage télécommandé est effectué de sorte à empêcher une collision entre le véhicule et un trafic en sens inverse.

6. Procédé selon l'une quelconque des revendications précédentes, lors duquel, s'il est impossible d'empêcher une collision entre le véhicule et un trafic en sens inverse, un signal d'arrêt est envoyé au véhicule et/ou au ou aux véhicule(s) du trafic en sens inverse.

7. Procédé selon l'une quelconque des revendications précédentes, lors duquel au moins quelques-unes, de préférence toutes les étapes de procédé précédemment citées des revendications précédentes sont enregistrées à des fins de documentation, de préférence au moyen d'une ou de plusieurs caméras vidéo.

8. Dispositif (201), destiné à faire fonctionner un véhicule d'après un procédé selon l'une quelconque des revendications précédentes, comprenant une télécommande (203) pour le guidage télécommandé du véhicule, de telle sorte qu'un écart minimum prédéfini entre le véhicule et des objets mobiles dans l'environnement du véhicule puisse être respecté,
pour respecter l'écart minimum prédéfini, le véhicule étant guidé dans une parmi plusieurs positions de stationnement du parking et
la position de stationnement étant déterminée en fonction d'un paramètre et le paramètre décrivant une situation de trafic momentanée et/ou attendue sur le parking, **caractérisé en ce que**
lorsque la situation de trafic momentanée et/ou attendue comprend une absence de trafic en sens inverse et un véhicule qui suit, le véhicule est guidé dans ladite position de stationnement qui, par rapport à sa position momentanée, est prévue le plus loin sur le parking et/ou
lorsque la situation de trafic momentanée et/ou attendue comprend une présence de trafic en sens inverse et une absence d'un véhicule qui suit, le véhicule est guidé dans la position de stationnement, qui, par rapport à sa position momentanée, est prévue le plus près sur le parking et/ou
lorsque la situation de trafic momentanée et/ou attendue comprend une présence de trafic en sens inverse et une présence d'un véhicule qui suit, on guide le véhicule dans la position de stationnement qui, par rapport à sa position momentanée, est prévue le plus près sur le parking.

9. Système de parking (301) destiné à des véhicules, comprenant un parking (303) et le dispositif (201) selon la revendication 8.

10. Système de parking (301) selon la revendication 9, le parking (303) comprenant différentes zones délimitées les unes des autres, qui sont notamment conçues de sorte à pouvoir être abordées séparément les unes des autres.

11. Système de parking (301) selon la revendication 9 ou 10, le parking (303) comprenant une zone propre, réservée à un service de voiturier entièrement automatique.

12. Système de parking (301) selon l'une quelconque des revendications 9 à 11, comprenant par ailleurs une supervision de parking, destinée à superviser le parking (303), qui est conçue en outre pour documenter au moins quelques-unes, notamment toutes les étapes de procédé citées dans les revendications 1 à 13.

13. Programme informatique, comprenant un code programme, pour la réalisation du procédé selon l'une quelconque des revendications 1 à 8, lorsque le programme informatique est exécuté sur un ordinateur.
